# EUROPÄISCHE PATENTANMELDUNG

(11) **EP 1 600 384 A1**
(43) Veröffentlichungstag der Anmeldung: **30.11.2005**
(21) Anmeldenummer: 05104458.4
(22) Anmeldetag: 25.05.2005
(51) Int. Cl.: B65D 1/02, B32B 27/32, B32B 27/34

(54) **Im Extrusions-Blasverfahren hergestelltes Kunststoffbehältnis**

(30) Priorität: 26.05.2004 DE 202004008570 U; 14.08.2004 DE 202004012764 U
(71) Anmelder: CROWN Raku GmbH, 76437 Rastatt (DE)
(72) Erfinder: Blettermann, René, 76479 Steinmauern (DE)
(74) Vertreter: Müller, Enno

(57) **Zusammenfassung**

Die Erfindung betrifft ein im Extrusions-Blasverfahren hergestelltes Kunststoffbehältnis (1), insbesondere Kunststoffflasche für Flüssigkeit, mit einem mehrschichtigen Aufbau, wobei eine die Stabilität erbringende Hauptschicht (3) aus Polypropylen besteht und dünne weitere Funktionsschichten (4, 5) ausgebildet sind. Um ein derartig hergestelltes Kunststoffbehältnis anzugeben, welches vergleichbar gute Eigenschaften wie Glas aufweist, schlägt die Erfindung vor" dass die Hauptschicht (3) die innerste Schicht ist und dass die äußerste Schicht (5) aus EVOH oder PA besteht, die mittels einer Haftvermittler-Schicht (4) mit der Hauptschicht verbunden ist.

## Beschreibung

Die Erfindung betrifft ein im Extrusions-Blasverfahren hergestelltes Kunststoffbehältnis, insbesondere eine Kunststoffflasche zur Aufnahme von Flüssigkeiten, mit einem mehrschichtigen Aufbau, wobei eine die Stabilität erbringende Hauptschicht aus Polypropylen besteht und dünnere weitere Funktionsschichten ausgebildet sind.

Die Herstellung mehrschichtiger Kunststoffbehältnisse im Extrusions-Blasverfahren ist eine bekannte Technologie. Im Extruder werden die mehreren, gesonderten Schichten übereinander liegend ausgebracht, in der Regel in Form eines Schlauches. Nach Erreichen einer bestimmten Länge erfolgt eine Abtrennung, und, gegebenenfalls durch das Blaswerkzeug selbst, Schließung des Schlauches sowie ein Aufblasen zum Erreichen der Behältnisform in einer Blasform.

Es ist auch bereits bekannt, Barriereschichten, die etwa aus EVOH (Ethylen Vinyl Alkohol Copolmer) oder PA (Polyamid) bestehen, in einen Verbund verschiedener Schichten eingebettet mit zu extrudieren und aufzublasen. Dies insbesondere bei sechsschichtigen Verbundschichten. Es ist auch bekannt, sie im direkten Kontakt mit dem Produkt, also innenseitig vorzusehen, dies üblicherweise bei vierschichtigem Verbund. Im Lebensmittel- und Pharmaziesektor, sowie auch bei Kosmetik und Körperpflege, wird großer Wert auf hochtransparente Verpackungen gelegt. Dies um dem Verbraucher eine möglichst gute Sichtprüfung des Produktes zu ermöglichen oder auch um Forderungen des Arzneimittelgesetzes nachzukommen. Man erreicht dies in der Regel durch Flaschen, die aus PET oder, in selteren Fällen, auch aus PVC bestehen. Im Pharmaziebereich wird ganz überwiegend noch mit Glas gearbeitet.

Glas ist insbesondere ein wesentlicher Werkstoff für Verpackungen, die für verderbliche Lebensmittel verwendet werden oder auch für Substanzen wie etwa Arzneimittel, die Arminosäuren und gelöste Fette aufweisen. Verpackungsmittel für diese Art von Substanzen müssen gute Barriereeigenschaften bei gleichzeitig hoher Transparenz aufweisen.

Hiervon ausgehend stellt sich der Erfindung die Aufgabe, ein im Extrusions-Blasverfahren hergestelltes Kunststoffbehältnis anzugeben, das vergleichbar gute Eigenschaften wie Glas aufweist.

Diese Aufgabe ist zunächst und im Wesentlichen beim Gegenstand des Anspruches 1 gelöst, wobei darauf abgestellt ist, dass die Hauptschicht die innerste Schicht ist und dass die äußerste Schicht aus EVOH oder PA besteht, welche äußerste Schicht mittels einer Haftvermittler-Schicht mit der Hauptschicht verbunden ist. Hierbei kann auch ein eben nur dreischichtiger Verbund, wie dies auch bevorzugt der Fall ist, vorgesehen sein. Es kann aber auch ein darüber hinaus mehrlagiger Verbund vorgesehen sein, wenn etwa die Haftvermittler-Schicht mit der Hauptschicht noch vermittels einer vierten oder fünften Schicht (erst) verbunden ist.

Eine so ausgebildete Kunststoffflasche bildet somit eine Kombination zwischen Glastransparenz und erwünschten bzw. erforderlichen Barriereeigenschaften.

Ein solchermaßen hergestelltes Kunststoffbehältnis zeichnet sich durch eine hohe Transparenz aus, die durch die äußere, zugleich Glanzeigenschaften aufweisende EVOH-Schicht bez. Polyamidschicht vorteilhaft unterstützt wird. Insbesondere entsteht ein optisch hochtransparenter Eindruck. Dies auch weiter insbesondere, wenn in dem Behältnis eine Flüssigkeit enthalten ist, die durch unmittelbaren Kontakt mit der PP-Schicht zu der optisch wirksamen Transparenz wesentlich beiträgt. Zugleich ist mit der äußersten Schicht eine vollwertige, ausreichende Barriereschicht vorgesehen. Es ergibt sich eine optimale Kombination für extrusionsgeblasene Kunststoffbehältnisse von hoher Transparenz und guter Barriereeigenschaft.

Ein solches Kunststoffbehältnis lässt sich nicht nur vorteilhaft im Lebensmittel-und Pharmaziesektor einsetzen. Sondern auch in dem Bereich Kosmetik bzw. Körperpflege. Zwar ist EVOH grundsätzlich hygroskopisch. Gleichwohl ist EVOH unter normalen Umweltbedingungen in dem hier beschriebenen Verbund als äußere Schicht ohne weiteres einsetzbar.

Hinsichtlich des Polyamids kann insbesondere ein Polyamid mit einem Anteil an Caprolactam und/oder AH-Salz zum Einsatz kommen, speziell ein solches, wie es in den Chemical-Abstracts unter der Nr. 24993-04-2 aufgeführt ist. Bevorzugt weist das Polyamid einen Schmelzpunkt (ISO 3146) im Bereich von 170 bis 220° C, weiter bevorzugt von 195° C auf. Zum Einsatz kommen können etwa die unter den Handelsnamen Polyamid Ultramid C35 mit den Untergruppen C35N und C35FN bekannten Typen. Grundsätzlich handelt es sich um ein PA-6. Die genannten Polyamide werden von der Firma BASF vertrieben.

Als Haftvermittler eignen sich grundsätzlich verschiedene Materialien. So etwa VC VA-Malein-Säure-Copolymerisate, VC-Copolymerisate als solche, polymerisierbare Polyester oder Vinylpyridin-Polymerisate in Kombination mit Epoxydharzen. Besonders bevorzugt ist ein Material wie es von der Firma Mitsui Sekka (Europa) unter der Bezeichnung Admer vertrieben wird.

Als Hauptschicht aus Polypropylen kommt insbesondere ein Polypropylen in Betracht, wie es von der Firma Borealis unter der Bezeichnung RB307MO vertrieben wird. Es hat eine Schmelztemperatur im Bereich von 180 bis 220° und eine Dichte im Bereich von 900 kg/cbm. Auch kann ein Polypropylen mit der Bezeichnung RB477 zum Einsatz kommen. Darüber hinaus sind auch insbesondere Polypropylene geeignet wie sie etwa von der Firma Atofina unter den Bezeichnungen PRM 021 und PRM 022 vertrieben werden. Allgemein kann das verwendete Polypropylen im Hinblick auf hohe Transparenz nukleiert sein, bspw. mit einem MFR (ISO 1133) von 1,5 g/10 min. (230° C/2.16 kg).

Alternativ, im Sinne von ohne weiteres gleichwertig, zu der genannten äußeren Polyamidschicht kann eine EVOH-Schicht, speziell eine aus dem Material der Firma Eval Europe, dort vertrieben unter dem Handelsnamen EVAL zum Einsatz kommen. Bevorzugt ist ein Ethylengehalt in der Größenordnung von 25 bis 40, speziell 30 bis 35 mol% und eine Dichte in g/cc von 1,1 bis 1,25 speziell 1,18 bis 1,20.

Nachstehend ist die Erfindung aber des Weiteren anhand der beigefügten Zeichnung, die jedoch lediglich ein Ausführungsbeispiel darstellt, erläutert. Hierbei zeigt:
- Fig. 1: eine schematische Seitenansicht einer Kunststoffflasche, wie sie hier zugrunde liegt; und
- Fig. 2: einen Schnitt, vergrößert, entlang der Linie II-II durch die Wandung des Kunststoffbehältnisses gemäß Fig.1.

Dargestellt und beschrieben ist ein Kunststoffbehältnis 1 in Form einer Flasche, das üblicherweise mit einem Verschluss 2 versehen ist.

Die Kunststoffflasche ist als Extrusions-Blasteil hergestellt und besitzt einen mehrschichtigen Wandaufbau.

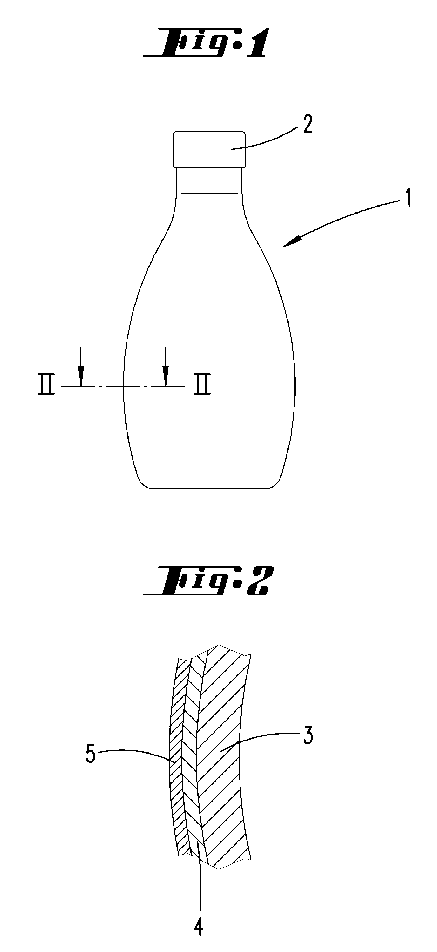

Der Wandaufbau ist in Fig.1 in größerer Einzelheit dargestellt.

Der Wandaufbau besteht aus einer Hauptschicht, hier der innersten Schicht 3. Weiter einer mittleren Schicht 4 und einer äußeren Schicht 5.

Wesentlich und für die Stabilität verantwortlich ist zunächst die innerste Schicht 3. Sie besteht aus Polypropylen.

Die innerste Schicht 3 hat einen Anteil an der Gesamtdicke der Wandung des Behältnisses 1 im Bereich von 70 bis 95 %, bevorzugt im Bereich von 85 bis 95, weiter bevorzugt im Bereich von 90 %.

Die mittlere Schicht 4 ist eine Haftvermittlerschicht.

Die äußerste Schicht 5 besteht beim Ausführungsbeispiel aus EVOH oder PA.

Hinsichtlich der speziell bevorzugten Werkstoffe wird auf die vorstehende Beschreibung verwiesen.

Die Gesamtdicke der Wandung kann beispielsweise zwischen 0,5 und 1,1 mm liegen. Bevorzugt ist ein Wert von beispielsweise 0,8 mm.

Die mittlere Schicht 4 und die äußerste Schicht 5 haben jeweils etwa eine gleiche Dicke. In Prozent der Gesamtdicke haben sie entsprechend einen Anteil von (je) 2,5 % bis 15 %.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Im Extrusions-Blasverfahren hergestelltes Kunststoffbehältnis (1), insbesondere Kunststoffflasche für Flüssigkeit, mit einem mehrschichtigen Aufbau, wobei eine die Stabilität erbringende Hauptschicht (3) aus Polypropylen besteht und dünne weitere Funktionsschichten (4, 5) ausgebildet sind, **dadurch gekennzeichnet, dass** die Hauptschicht (3) die innerste Schicht ist und dass die äußerste Schicht (5) aus EVOH oder PA besteht, die mittels einer Haftvermittler-Schicht (4) mit der Hauptschicht verbunden ist.

2. Kunststoffflasche nach Anspruch 1 oder insbesondere danach, **dadurch gekennzeichnet, dass** das Kunststoffbehältnis (1) nur aus den genannten drei Schichten (3, 4, 5) besteht.

3. Kunststoffflasche nach einem oder mehreren der vorhergehenden Ansprüche oder insbesondere danach, **dadurch gekennzeichnet, dass** die Hauptschicht (3) einen Anteil an der Gesamtdicke der Wandung des Kunststoffbehältnisses (1) von 70 bis 95 % aufweist.

4. Kunststoffflasche nach einem oder mehreren der vorhergehenden Ansprüche oder insbesondere danach, dass die Hauptschicht (3) an der Gesamtdicke einen Anteil von 90 % aufweist.
